(19) Europäisches Patentamt
European Patent Office
Office européen des brevets

(11) **EP 1 903 719 A1**

(12) **EUROPEAN PATENT APPLICATION**
published in accordance with Art. 153(4) EPC

(43) Date of publication:
**26.03.2008 Bulletin 2008/13**

(51) Int Cl.:
***H04L 12/28*** (2006.01)

(21) Application number: **06768094.2**

(22) Date of filing: **11.07.2006**

(86) International application number:
**PCT/JP2006/313781**

(87) International publication number:
**WO 2007/007760 (18.01.2007 Gazette 2007/03)**

(84) Designated Contracting States:
**DE FR GB**

(30) Priority: **13.07.2005 JP 2005203847**

(71) Applicant: **MATSUSHITA ELECTRIC INDUSTRIAL CO., LTD.**
**Osaka 571-8501 (JP)**

(72) Inventors:
• **NAKA, Katsuyoshi**
**c/o Matsushita El.Ind.Co.Ltd.**
**2-1-61, Shiromi, Chuo-ku, Osaka 540-6207 (JP)**

• **YAMAZAKI, Junya**
**c/o Panasonic Mobile Comm. R&D lab.Co.Ltd.**
**Sendai-shi, Miyagi 981-3206 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **COMMUNICATION TERMINAL APPARATUS AND TRANSMITTING METHOD**

(57) A communication terminal apparatus capable of suppressing communication delay independently of the packet size, efficiently performing communication, and further solving the problem of hidden terminals. In this apparatus, a number-of-STAs holding part (107) counts, based on a received signal inputted from an STA determining part (105), the other STAs in the same cell. A back-off establishing part (108), which stores a table or aback-off value calculation formula in accordance with the number of the STAs in the cell, uses the number of the STAs in the information about the number of registered terminals in the cell to select or calculate the corresponding back-off value, thereby establishing the back-off value. A packet generating part (109) generates a packet including both number-of-terminals information and transport data. A transmission standby part (112) establishes a transmission standby time such that only the back-off value is on transmission-standby. The transmission standby part (112) then causes the packet to be on transmission-standby by the established transmission standby time and be outputted after a lapse of the transmission standby time.

FIG.3

EP 1 903 719 A1

**Description**

Technical Field

The present invention relates to a communication terminal apparatus and transmitting method, and relates, for example, to a communication terminal apparatus and transmitting method that perform transmission by means of a CSMA/CA (Carrier Sense Multiple Access / Collision Avoidance) scheme.

Background Art

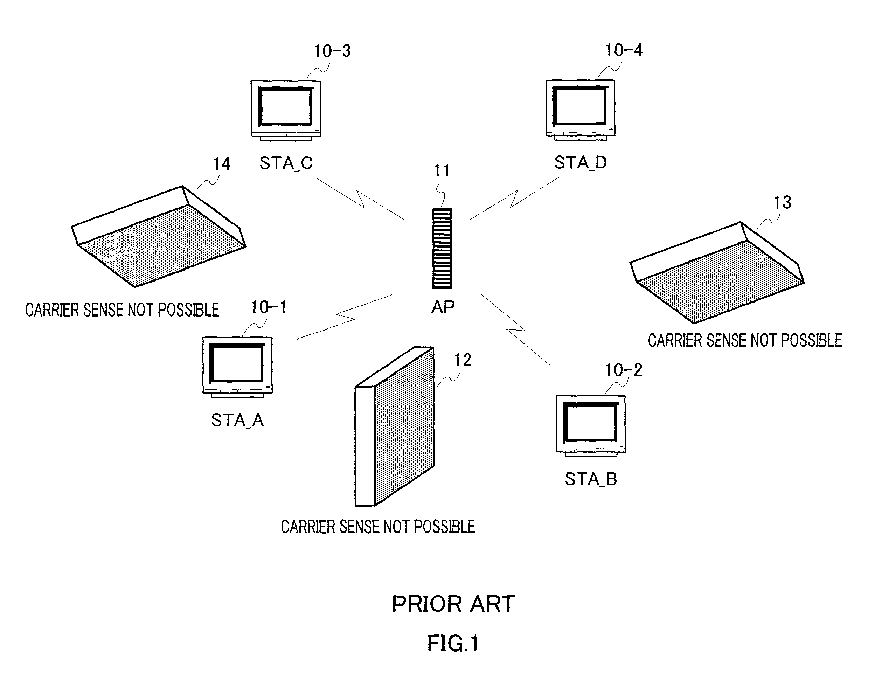

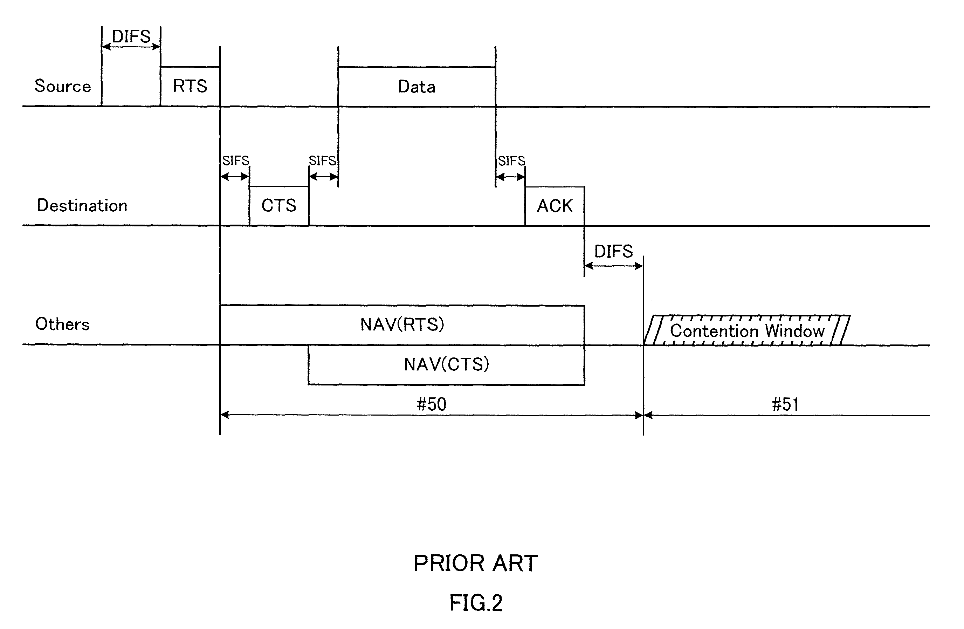

CSMA/CA communication, typified by a radio LAN or the like, is a scheme whereby an STA (station) that has transmission data confirms (by carrier sense) that another STA is not performing transmission before starting to transmit. The reason for performing this kind of carrier sense is to prevent the occurrence of a collision that would occur if data were transmitted during transmission by another STA - that is, a collision with data being transmitted and received by other STAs. The term "collision" here means that the receiving side receives several packet data that overlap time-wise.
In CSMA/CA communication there is a problem of a collision occurring with a terminal apparatus at a location where carrier sense cannot be performed from a terminal - the so-called hidden terminal problem. For example, when four STAs 10-1 through 10-4 perform communication via one AP (access point), as shown in FIG.1, each of STAs 10-1 through 10-4 performs carrier sense to prevent collisions. However, STA 10-1 cannot detect the fact that STA 10-2 is performing communication due to the presence of an obstruction 12. Furthermore, STA 10-1 cannot detect the fact that STA 10-3 is performing communication due to the presence of an obstruction 14. Similarly, STA 10-2 cannot detect the fact that STA 10-1 is performing communication due to the presence of obstruction 12, and cannot detect the fact that STA 10-4 is performing communication due to the presence of an obstruction 13. In such a state, a similar situation also applies to STA 10-3 and STA 10-4. In this case, there is a possibility of a STA 10-1 collision occurring between STA 10-2 and STA 10-3, a STA 10-2 collision occurring between STA 10-1 and STA 10-4, a STA 10-3 collision occurring between STA 10-1 and STA 10-4, and an STA 10-4 collision occurring between STA 10-2 and STA 10-3.
As a method of dealing with this kind of hidden terminal problem, in the MAC (Medium Access Control) specification an RTS/CTS (Ready to send / Clear to send) scheme is used avoid contention when data communication is performed (see Non-patent Document 1, for example). The RTS/CTS scheme is a method whereby an STA wishing to perform transmission transmits RTS and an AP receiving RTS returns CTS, and on receiving CTS the STA places transmission on standby for the time period indicated by the CTS. By this means, a collision between data frames themselves can be avoided. FIG.2 is a diagram illustrating the RTS/CTS scheme. In a standby period #50 indicated by CTS, an STA that has received the CTS is prohibited from accessing the AP and therefore enters a transmission standby state. Then data transmission is performed in a predetermined period #51 after the elapse of standby period #50.
Non-patent Document 1: IEEE802.11-1999

Disclosure of Invention

Problems to be Solved by the Invention

However, with a conventional apparatus, a problem with the RTS/CTS scheme is that it is necessary to add a time period called an IFS (Inter Frame Space) when RTS and CTS are transmitted, and therefore RTS and CTS frame exchange takes time, and the system is not efficient. Another problem with a conventional apparatus is that, since frames are redundant in the RTS/CTS scheme, when the packet size is small, the time for a data exchange including a collision is shorter than the RTS and CTS frame exchange time, and the communication time is longer when the RTS/CTS scheme is used than when RTS/CTS is not used. Yet another problem with a conventional apparatus is that, if the number of STAs in the area covered by an AP is greater than or equal to a certain number, RTS frames themselves causes collisions, and communication delays increase due to RTS retransmissions.
It is an object of the present invention to provide a communication terminal apparatus and transmitting method capable of suppressing communication delay irrespective of the packet size, performing communication efficiently, and furthermore solving the hidden terminal problem.

Means for Solving the Problems

A communication terminal apparatus of the present invention employs a configuration that includes: a detection section that detects, from a received signal, data addressed to another station in the same cell as the cell to which the station itself belongs; an acquisition section that finds the number of other stations in the same cell based on the data addressed to another station detected by the detection section; a reporting section that reports the number of other stations found by the acquisition section to a communicating station; a receiving section that receives transmission period setting information that is information for setting a predetermined transmission period in which the communicating station does not overlap the station itself based on the number of other stations reported by the reporting section; and a transmission period setting section that transmits transmission data in the transmission period set based on the transmission period setting information.

A transmitting method of the present invention includes: a step in which each communication terminal apparatus detects, from a received signal, data addressed to another station in the same cell as the cell to which the station itself belongs; a step in which each communication terminal apparatus finds the number of other stations in the same cell based on the detected data addressed to another station; a step in which the found number of other stations is reported from each communication terminal apparatus to a communication apparatus; a step in which the communication apparatus generates transmission period setting information that is information for setting a transmission period of each communication terminal apparatus based on the reported number of other stations; a step in which the communication apparatus transmits the generated transmission period setting information of each communication terminal apparatus; a step in which each communication terminal apparatus receives the transmission period setting information; and a step in which each communication terminal apparatus transmits transmission data in the transmission period set based on the received transmission period setting information.

Advantageous Effect of the Invention

The present invention is capable of suppressing communication delay irrespective of the packet size, performing communication efficiently, and furthermore suppressing impact due to the hidden terminal problem.

Brief Description of Drawings

FIG.1 is a drawing explaining the hidden terminal problem;
FIG.2 is a drawing explaining the RTS/CTS scheme;
FIG.3 is a block diagram showing the configuration of a communication terminal apparatus according to Embodiment 1 of the present invention;
FIG.4 is a block diagram showing the configuration of a communication apparatus according to Embodiment 1 of the present invention;
FIG.5 is a sequence chart showing the operation of a communication terminal apparatus and a communication apparatus according to Embodiment 1 of the present invention;
FIG.6 is a block diagram showing the configuration of a communication terminal apparatus according to Embodiment 2 of the present invention;
FIG.7 is a block diagram showing the configuration of a communication apparatus according to Embodiment 2 of the present invention;
FIG.8 is a sequence chart showing the operation of a communication terminal apparatus and a communication apparatus according to Embodiment 2 of the present invention;
FIG.9 is a drawing showing back-off parameter setting information according to Embodiment 2 of the present invention;
FIG.10 is a block diagram showing the configuration of a communication terminal apparatus according to Embodiment 3 of the present invention;
FIG.11 is a block diagram showing the configuration of a communication apparatus according to Embodiment 3 of the present invention; and
FIG.12 is a sequence chart showing the operation of a communication terminal apparatus and a communication apparatus according to Embodiment 3 of the present invention.

Best Mode for Carrying Out the Invention

Embodiments of the present invention will now be described in detail with reference to the accompanying drawings.

(Embodiment 1)

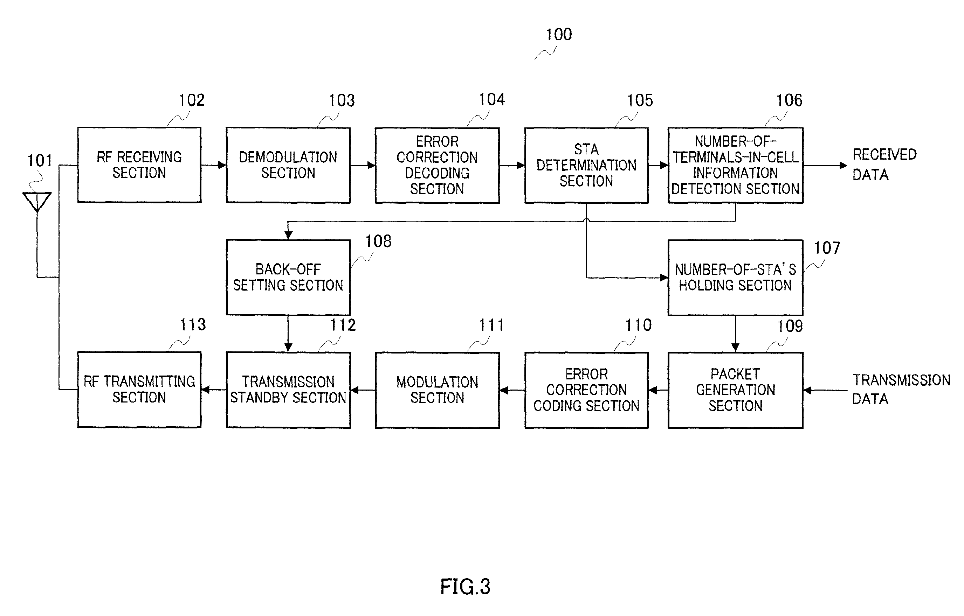

FIG.3 is a block diagram showing the configuration of a communication terminal apparatus 100 according to Embodiment 1 of the present invention. Communication terminal apparatus 100 is an STA, for example.

An antenna 101 receives a signal and outputs this signal to an RF receiving section 102, and also transmits a packet input from an RF transmitting section 113.

RF receiving section 102 down-converts a received signal input from antenna 101 from radio frequency to baseband frequency, and outputs the resulting signal to a demodulation section 103.

Demodulation section 103 demodulates the received signal input from RF receiving section 102, and outputs the demodulated signal to an error correction decoding section 104.

Error correction decoding section 104 performs error correction decoding of the received signal input from demodulation section 103, and outputs the decoded signal to an STA determination section 105.

STA determination section 105, which is a detection section, determines whether the received signal input from error correction decoding section 104 is addressed to this station or is addressed to another STA. If the result of this determination is that the received signal is addressed to this station, STA determination section 105 outputs the received signal to a number-of-terminals-in-cell information detection section 106. Alternatively, if the result of the determination is that the received signal is addressed to another STA, STA determination section 105 outputs the received signal to a number-of-STAs holding section 107.

If number-of-registered-terminals-in-cell information (transmission period setting information) is included in the received signal input from STA determination section 105, number-of-terminals-in-cell information detection section 106 detects the number-of-registered-terminals-in-cell information included in the received signal, and outputs this information to a back-off setting section 108. Number-of-terminals-in-cell information detection section 106 also outputs the received signal after detection of information on the number of registered terminals in the cell as received data.

Number-of-STAs holding section 107, which is an acquisition section, counts the number of other STAs based on the received signal input from STA determination section 105. Specifically, number-of-STAs holding section 107 references the MAC header of the received signal input from STA determination section 105, holds the ID within the MAC header, and counts the number of different IDs. As the ID is different for each STA, the number of other STAs can be ascertained by counting the number of different IDs. Then number-of-STAs holding section 107 outputs the count value of the number of other STAs in a predetermined period to a packet generation section 109. At this time, number-of-STAs holding section 107 includes all counted IDs in the information on the number of terminals.

Back-off setting section 108 stores a table or a back-off value calculation formula in accordance with the number of STAs in the cell, and uses the number of STAs in the information on the number of registered terminals in the cell input from number-of-terminals-in-cell information detection section 106 to select or calculate the corresponding back-off value, therebysettingtheback-offvalue. Then back-off setting section 108 outputs the set back-off value to a transmission standby section 112. At this time, if the total of the number of other STAs in the same cell and the station itself reported by communication terminal apparatus 100 to a communication apparatus 200 described later herein, and the number of STAs in number-of-terminals-in-cell information sent from communication apparatus 200, are different, this means that a hidden terminal problem has occurred. The back-off value here is a standby time period during which transmission is not performed in order to avoid a collision. The method of setting the back-off value will be described later herein.

Packet generation section 109 generates a packet including number-of-terminals information input from number-of-STAs holding section 107 and transmission data, and outputs this packet to an error correction coding section 110.

Error correction coding section 110 performs error correction coding of the packet input from packet generation section 109, and outputs the packet to a modulation section 111.

Modulation section 111 modulates the packet input from error correction coding section 110, and outputs the modulated packet to transmission standby section 112.

Transmission standby section 112 sets a transmission standby period so as to perform transmission standby equivalent to the back-off value input from back-off setting section 108. Then transmission standby section 112 causes the packet input from modulation section 111 to be placed on transmission standby for the set transmission standby period, and outputs the packet to RF transmitting section 113 after the elapse of the transmission standby period. Back-off setting section 108 and transmission standby section 112 make up a transmission period setting section.

RF transmitting section 113 up-converts the packet input from transmission standby section 112 from baseband frequency to radio frequency, and outputs the up-converted packet to antenna 101.

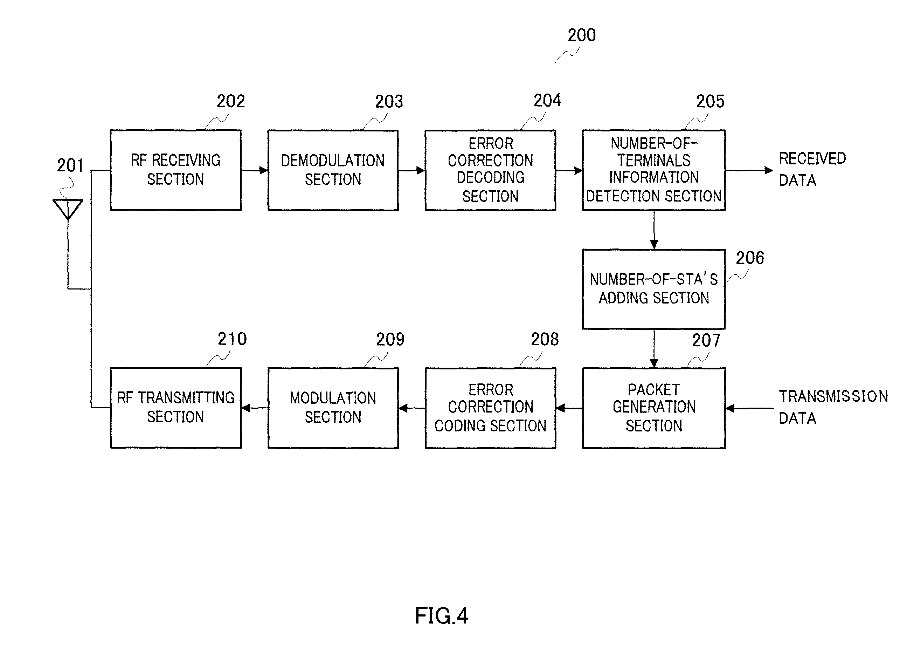

The configuration of communication apparatus 200 will now be described using FIG.4. FIG.4 is a block diagram showing the configuration of communication apparatus 200. Communication apparatus 200 is an AP, for example.

An antenna 201 receives a signal and outputs this signal to an RF receiving section 202, and also transmits a packet input from an RF transmitting section 210.

RF receiving section 202 down-converts a received signal input from antenna 201 from radio frequency to baseband frequency, and outputs the resulting signal to a demodulation section 203.

Demodulation section 203 demodulates the received signal input from RF receiving section 202, and outputs the resulting signal to an error correction decoding section 204.

Error correction decoding section 204 performs error correction decoding of the received signal input from demodulation section 203, and outputs the resulting signal to a number-of-terminals information detection section 205.

Number-of-terminals information detection section 205 detects number-of-terminals information included in a received signal of each STA input from error correction decoding section 204, and outputs this information to a number-of-STAs adding section 206. Also, after detecting the number-of-terminals information, number-of-terminals information detection section 205 outputs the received signal as receive data.

Number-of-STAs adding section 206, which is an adding section, adds up the number of STAs in the cell based on the number-of-terminals information of each STA input from number-of-terminals information detection section 205, and registers the number of STAs in the cell. Specifically, number-of-STAs adding section 206 registerstheIDofnumber-of-terminalsinformationinput from number-of-terminals information detection section 205. Furthermore, number-of-STAs adding section 206 counts the number of different IDs among the registered IDs. Then number-of-STAs adding section 206 outputs the counted number of IDs to a packet generation section 207 as number-of-registered-terminals-in-cell information, which is information on the number of STAs in the same cell. At this time, since communication apparatus 200 can receive number-of-terminals information from a plurality of communication terminal apparatuses in its own cell, the number of STAs in that cell counted by number-of-STAs adding section 206 is an accurate figure.

Packet generation section 207 generates a packet including number-of-registered-terminals-in-cell information input from number-of-STAs adding section 206 and transmission data, and outputs this packet to an error correction coding section 208.

Error correction coding section 208 performs error correction coding of the packet input from packet generation section 207, and outputs the packet to a modulation section 209.

Modulation section 209 modulates the packet input from error correction coding section 208, and outputs the modulated packet to RF transmitting section 210.

RF transmitting section 210 up-converts the packet input from modulation section 209 from baseband frequency to radio frequency, and outputs the up-converted packet to antenna 201.

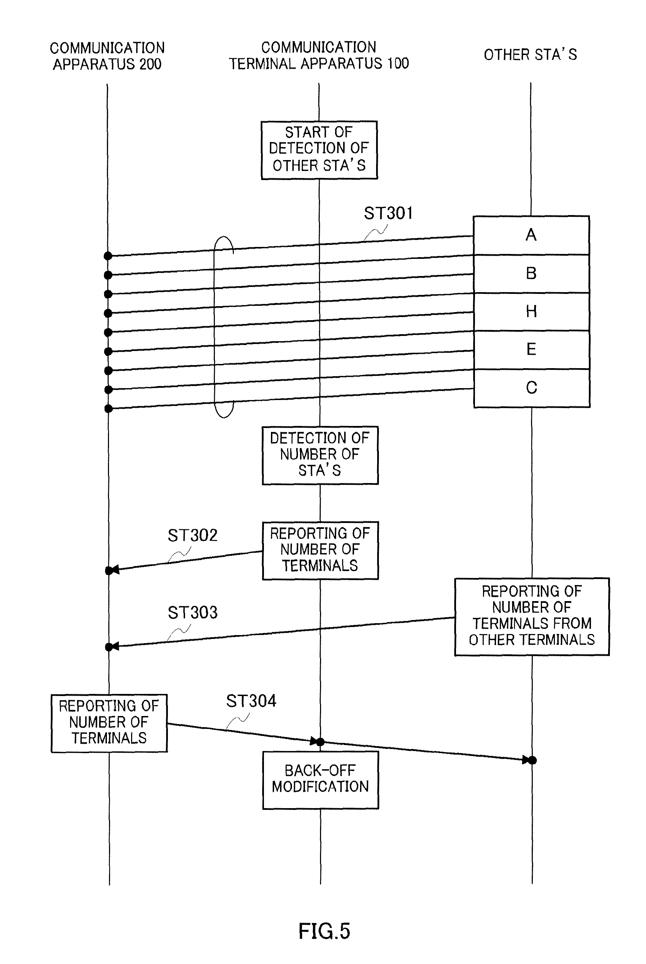

The operation of communication terminal apparatus 100 and communication apparatus 200 will now be described using FIG.5. FIG.5 is a sequence chart showing the operation of communication terminal apparatus 100 and communication apparatus 200.

First, communication terminal apparatus 100 starts detection of other STAs. A plurality of STAs (A, B, H, E, and C) other than this station perform communication with communication apparatus 200 (step ST301).

In communication terminal apparatus 100 constituting this station, a signal received by RF receiving section 102 is demodulated by demodulation section 103 and undergoes error correction decoding by error correction decoding section 104, after which STA determination section 105 determines whether the received signal is addressed to this station or is addressed to another STA. If the received signal is addressed to this station, STA determination section 105 processes the signal as received data. On the other hand, if the received signal is addressed to another STA, number-of-STAs holding section 107 holds information on the number of other STAs.

After a given time has elapsed, communication terminal apparatus 100 performs transmission of a packet including number-of-terminals information, and transmits information on the number of other STAs detected by communication terminal apparatus 100 to communication apparatus 200 (step ST302). STAs other than communication terminal apparatus 100 also transmit number-of-terminals information to communication apparatus 200 in the same way (step ST303).

Communication apparatus 200 detects number-of-terminals information transmitted from each STA including communication terminal apparatus 100 by means of number-of-terminals information detection section 205, via RF receiving section 202 and so forth, and adds up and registers the number of STAs by means of number-of-STAs adding section 206. After registration of the number of STAs is completed, number-of-STAs adding section 206 sends number-of-registered-terminals-in-cell information to packet generation section 207, and communication apparatus 200 transmits the number-of-registered-terminals-in-cell information to communication terminal apparatus 100 and other STAs (step ST304).

Communication terminal apparatus 100 receives a packet including information on the number of registered terminals in the cell by means of number-of-terminals-in-cell information detection section 106, and sends that information to back-off setting section 108. Back-off setting section 108 sets table selection in accordance with the number of other STAs, or a back-off calculation formula in accordance with the number of other STAs. A value provided by the back-off table or back-off calculation formula set by back-off setting section 108 is registered as a back-off value by transmission standby section 112, and used as a value for back-off.

The method by which a back-off value is set by back-off setting section 108 will now be described. Equation (1), for example, is used when setting a back-off value.

$$Back\text{-}off\ base\ value\ =\ 2^{n+4}-1 \qquad (1)$$

where n is the number of retransmissions (n=0 in the case of the initial transmission)

Then back-off setting section 108 sets a value greater than or equal to 0 and less than or equal to the back-off base value found from Equation (1) as the back-off value.

Another way of setting the back-off value is to use Equation (2), for example. Equation (2) applies to a case in which the number of STAs in the same cell is $2^{4+k}$ to $2^{(k+1)}$.

$$Back\text{-}off\ base\ value\ =\ 2^{n+4+k}-1 \qquad (2)$$

where n: Number of retransmissions (n=0 in the case of the initial transmission), and

    k: Back-off parameter

Then back-off setting section 108 sets a value greater than or equal to 0 and less than or equal to the back-off base value found from Equation (2) as the back-off value. Here, back-off parameter k is used to modify Equation (2) when setting the back-off value.

For example, if back-off parameter k = 1 when the number of STAs in the same cell is 17, from Equation (2) the back-off base value is found as shown in Equation (3).

$$Back\text{-}off\ base\ value\ =\ 2^{n+5}-1 \qquad (3)$$

Therefore, since n is the number of retransmissions, it is possible for the back-off value for the initial transmission (n=0) to be set to a value greater than or equal to 0 and less than or equal to 31, and it is possible for the back-off value for the first retransmission (n=1) to be set to a value greater than or equal to 31 and less than or equal to 63. The value is found in a similar way when the number of retransmissions is 2 or more.

Thus, according to Embodiment 1, each communication terminal apparatus finds the number of other STAs in the cell and reports this to the communication apparatus, and the communication apparatus reports information on the number of registered STAs in the cell to each STA, with the result that it is possible to suppress communication delay irrespective of the packet size, perform communication efficiently, and furthermore suppress impact due to the hidden terminal problem.

(Embodiment 2)

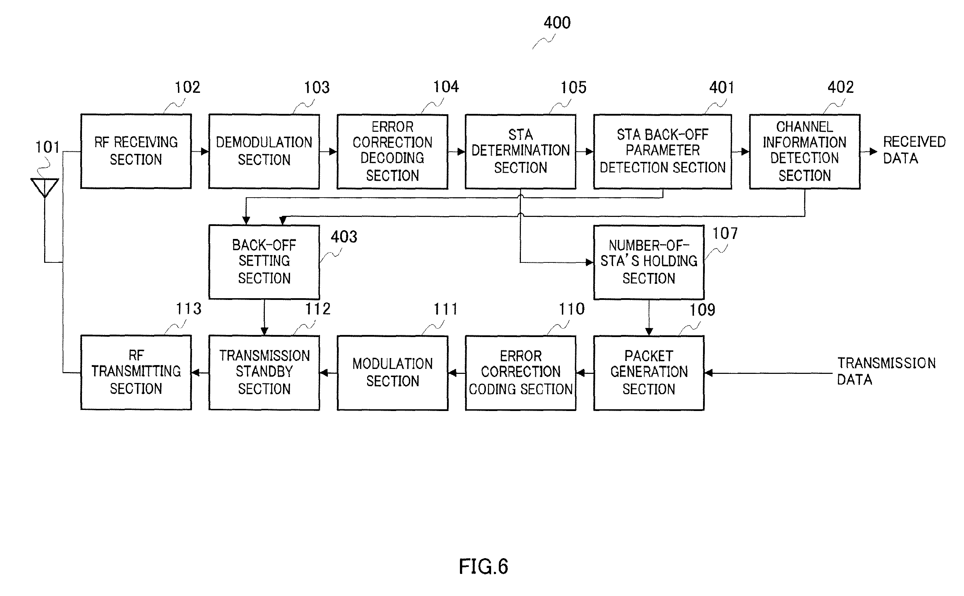

FIG.6 is a block diagram showing the configuration of a communication terminal apparatus 400 according to Embodiment 2 of the present invention. Communication terminal apparatus 400 is an STA, for example.

As shown in FIG. 6, in communication terminal apparatus 400 according to Embodiment 2, number-of-terminals-in-cell information detection section 106 has been eliminated from communication terminal apparatus 100 according to Embodiment 1 shown in FIG.3, an STA back-off parameter detection section 401 and a channel information detection section 402 have been added, and a back-off setting section 403 is provided instead of back-off setting section 108. Parts in FIG.6 having the same configuration as in FIG.3 are assigned the same reference codes as in FIG.3, and descriptions thereof are omitted.

STA determination section 105 determines whether a received signal input from error correction decoding section 104 is addressed to this station or is addressed to another STA. If the result of this determination is that the received signal is addressed to this station, STA determination section 105 outputs the received signal to STA back-off parameter detection section 401. Alternatively, if the result of the determination is that the received signal is addressed to another STA, STA determination section 105 outputs the received signal to number-of-STAs holding section 107.

STA back-off parameter detection section 401 detects back-off parameter information included in the received signal input from STA determination section 105, and outputs this information to back-off setting section 403. Then STA back-off parameter detection section 401 outputs the received signal after detection of back-off parameter information to channel information detection section 402. A back-off parameter here is, for example, k in Equation (2).

Channel information detection section 402 detects channel information included in the received signal input from STA back-off parameter detection section 401, and outputs this information to back-off setting section 403. Channel information detection section 402 also outputs the received signal after detection of channel information as receive data.

Back-off setting section 403 stores a table or a back-off value calculation formula in accordance with the number of STAs in the cell, and selects or calculates a back-off value based on back-off parameter information input from STA back-off parameter detection section 401 and channel information input from channel information detection section 402, thereby setting the back-off value. Thenback-off setting section 403 outputs the set back-off value to transmission standby section 112.

Transmission standby section 112 sets a transmission standby period based on the back-off value input from back-off setting section 403. Then transmission standby section 112 causes the packet input from modulation section 111 to be placed on transmission standby for the set transmission standby period, and outputs the packet to RF transmitting section 113 after the elapse of the transmission standby period.

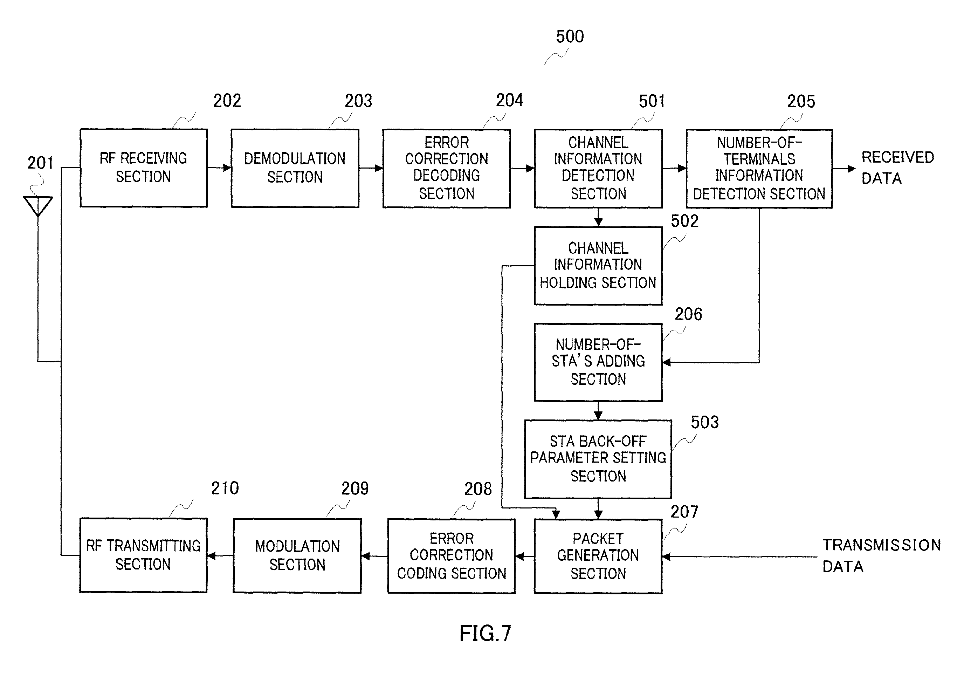

The configuration of a communication apparatus 500 according to Embodiment 2 will now be described using FIG.7. FIG. 7 is a block diagram showing the configuration of communication apparatus 500. Communication apparatus 500 is an AP, for example.

As shown in FIG.7, in communication apparatus 500 according to Embodiment 2, a channel information detection section 501, channel information holding section 502, and STA back-off parameter setting section 503 have been added to communication apparatus 200 according to Embodiment 1 shown in FIG.4. Parts in FIG.7 having the same configuration as in FIG.4 are assigned the same reference codes as in FIG.4, and descriptions thereof are omitted.

Error correction decoding section 204 performs error correction decoding of a received signal input from demodulation section 203, and outputs the resulting signal to channel information detection section 501.

Channel information detection section 501 detects channel information of each STA in the same cell included in a received signal input from error correction decoding section 204, and outputs that information to channel information holding section 502. Here, channel information is CQI information (information indicating the channel quality), MCS information (information indicating the transmission rate), received power information (information indicating the received power of communication terminal apparatus 400), communication QoS information (information indicating the QoS), or the like. Communication QoS information is, for example, information on the data type, such as voice, video, data, background, and so forth.

Channel information holding section 502 holds channel information of each STA input from channel information detection section 501. Then channel information holding section 502 outputs held channel information to packet generation section 207 at predetermined timing.

Number-of-terminals information detection section 205 detects number-of-terminals information of each STA included in a received signal input from channel information detection section 501, and outputs this information to number-of-STAs adding section 206. Also, after detecting the number-of-terminals information, number-of-terminals information detection section 205 outputs the received signal as received data.

Number-of-STAs adding section 206 adds up and registers the number of STAs based on the number-of-terminals information input from number-of-terminals information detection section 205. Specifically, number-of-STAs adding section 206 registerstheIDofnumber-of-terminalsinformationinput from number-of-terminals information detection section 205. Furthermore, number-of-STAs adding section 206 counts the number of different IDs among the registered IDs. Then number-of-STAs adding section 206 outputs the counted number of IDs to STA back-off parameter setting section 503 as number-of-registered-terminals-in-cell information, which is information on the number of STAs in the same cell.

STA back-off parameter setting section 503 sets a back-off parameter based on the number-of-registered-terminals-in-cell information input from number-of-STAs adding section 206. Then STA back-off parameter setting section 503 outputs information on the set back-off parameter to packet generation section 207.

Packet generation section 207 generates a packet including channel information of each STA input from channel information holding section 502, back-off parameter information input from STA back-off parameter setting section 503, and transmission data, and outputs this packet to error correction coding section 208.

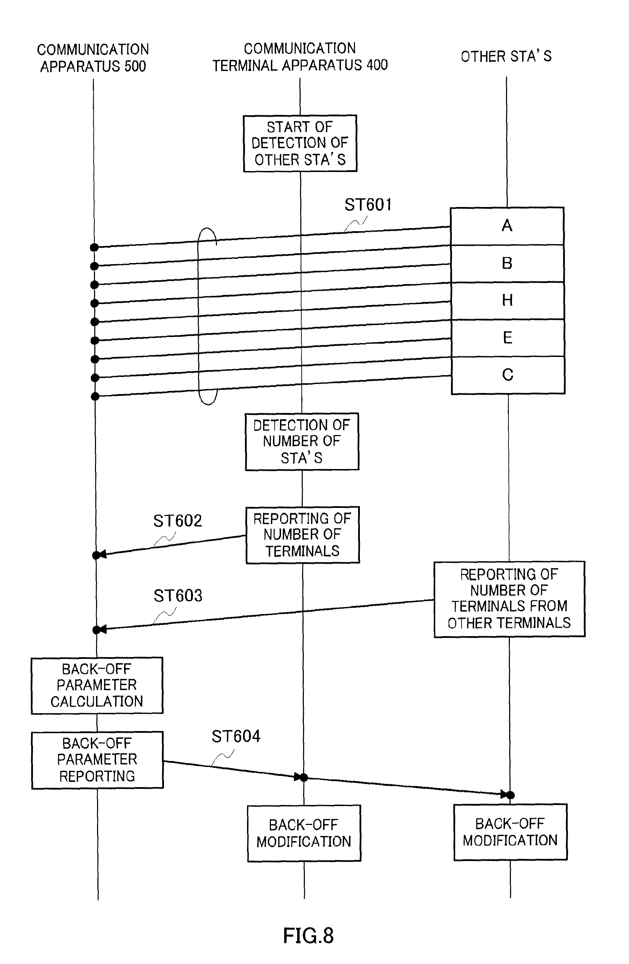

The operation of communication terminal apparatus 400 and communication apparatus 500 will now be described using FIG.8. FIG.8 is a sequence chart showing the operation of communication terminal apparatus 400 and communication apparatus 500.

First, communication terminal apparatus 400 starts detection of other STAs. A plurality of STAs (A, B, H, E, and C) other than this station perform communication with communication apparatus 500 (step ST601). At this time, communication apparatus 500 holds channel information of each STA including communication terminal apparatus 400 in channel information holding section 502.

In communication terminal apparatus 400 constituting this station, a signal received by RF receiving section 102 is demodulated by demodulation section 103 and undergoes error correction decoding by error correction decoding section 104, after which STA determination section 105 determines whether the received signal is addressed to this station or is addressed to another STA. If the received signal is addressed to this station, STA determination section 105 processes the signal as received data. On the other hand, if the received signal is addressed to another STA, number-of-STAs holding section 107 holds information on the number of other STAs.

After a given time has elapsed, communication terminal apparatus 400 performs transmission of a packet including number-of-terminals information, and transmits information on the number of other STAs detected by communication terminal apparatus 400 to communication apparatus 500 (step ST602). STAs other than communication terminal apparatus 400 also transmit number-of-terminals information to communication apparatus 500 in the same way (step ST603).

Communication apparatus 500 detects number-of-terminals information transmitted from each STA including communication terminal apparatus 400 by means of number-of-terminals information detection section 205, via RF receiving section 202 and so forth, and adds up and registers the number of STAs by means of number-of-STAs adding section 206. After registration of the number of STAs is completed, number-of-STAs adding section 206 sends number-of-registered-terminals-in-cell information to STA back-off parameter setting section 503, and STA back-off parameter setting section 503 sets a back-off parameter for each STA. Communication apparatus 500 transmits back-off parameter information and channel information to communication terminal apparatus 400 and other STAs (step ST604).

Communication terminal apparatus 400 receives a packet including back-off parameter information by means of STA back-off parameter detection section 401, and sends that information to back-off setting section 403. Also, communication terminal apparatus 400 receives a packet including channel information by means of channel information detection section 402, and sends that information to back-off setting section 403. Back-off setting section 403 sets table selection in accordance with the number of other STAs and channel information, or a back-off calculation formula in accordance with the number of other STAs and channel information. A value provided by the back-off table or back-off value calculation formula set by back-off setting section 403 is registered as a back-off value by transmission standby section 112, and used as a value for back-off.

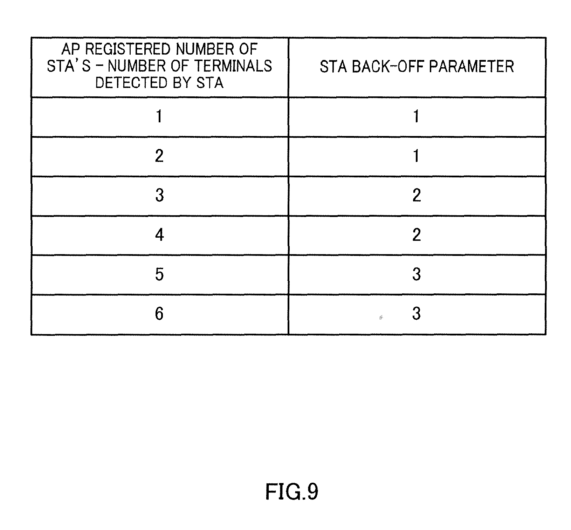

FIG.9 is a drawing showing an example of back-off parameter setting information in which the number of STAs in the same cell (number-of-registered-terminals-in-cell information) and back-off parameters are mutually associated. From FIG.9, back-off parameter setting information is such that a back-off parameter with a stochastically largish value is set, and by this means the probability of a collision can be reduced.

Thus, according to Embodiment 2, each communication terminal apparatus finds the number of other STAs in the cell and reports this to the communication apparatus, the communication apparatus reports a set back-off parameter to each communication terminal apparatus, and each communication terminal apparatus sets a back-off value based on a received back-off parameter, with the result that it is possible to suppress communication delay irrespective of the packet size, perform communication efficiently, and furthermore solve the problem of hidden terminals.

(Embodiment 3)

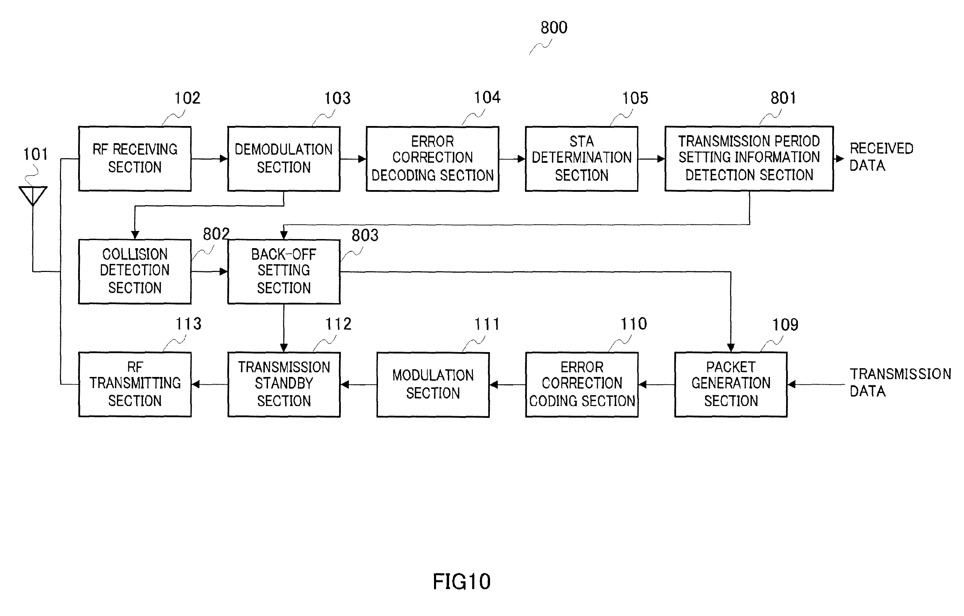

FIG.10 is a block diagram showing the configuration of a communication terminal apparatus 800 according to Embodiment 3 of the present invention. Communication terminal apparatus 800 is an STA, for example.

As shown in FIG.10, in communication terminal apparatus 800 according to Embodiment 3, number-of-terminals-in-cell information detection section 106 and number-of-STAs holding section 107 have been eliminated from communication terminal apparatus 100 according to Embodiment 1 shown in FIG.3, a transmission period setting information detection section 801 and collision detection section 802 have been added, and a back-off setting section 803 is provided instead of back-off setting section 108. Parts in FIG. 10 having the same configuration as in FIG.3 are assigned the same reference codes as in FIG.3, and descriptions thereof are omitted.

Demodulation section 103 demodulates a received signal input from RF receiving section 102, and outputs the resulting signal to error correction decoding section 104 and collision detection section 802.

STA determination section 105 determines whether the received signal input from error correction decoding section 104 is addressed to this station or is addressed to another STA. If the result of this determination is that the received signal is addressed to this station, STA determination section 105 outputs the received signal to transmission period setting information detection section 801. Alternatively, if the result of the determination is that the received signal is addressed to another STA, STA determination section 105 discards the received signal without outputting it.

Transmission period setting information detection section 801 detects transmission period setting information included in a received signal input from STA determination section 105, and outputs this information to back-off setting section 803. Transmission period setting information detection section 801 also outputs the received signal after detection of transmission period setting information as received data.

Collision detection section 802 detects a collision between data addressed to this station and data addressed to another STA based on a received signal input from demodulation section 103. Then collision detection section 802 outputs information on the number of detected collisions to back-off setting section 803.

Back-off setting section 803 sets a back-off value based on the information on the number of detected collisions input from collision detection section 802, and then outputs the set back-off value to transmission standby section 112. If the back-off value has been set with a modification, back-off setting section 803 outputs back-off parameter information including post-modification back-off value to packet generation section 109. If transmission period setting information that restores the back-off parameter to the pre-modification back-off parameter is input from transmission period setting information detection section 801, back-off setting section 803 outputs the back-off value found by restoring the pre-modification back-off parameter to transmission standby section 112.

Packet generation section 109 generates a packet including transmission data and back-off parameter information input from back-off setting section 803, and outputs this packet to error correction coding section 110.

Transmission standby section 112 sets a transmission standby period so as to perform transmission standby equivalent to the back-off value input from back-off setting section 803. Then transmission standby section 112 causes the packet input from modulation section 111 to be placed on transmission standby for the set transmission standby period, and outputs the packet to RF transmitting section 113 after the elapse of the transmission standby period.

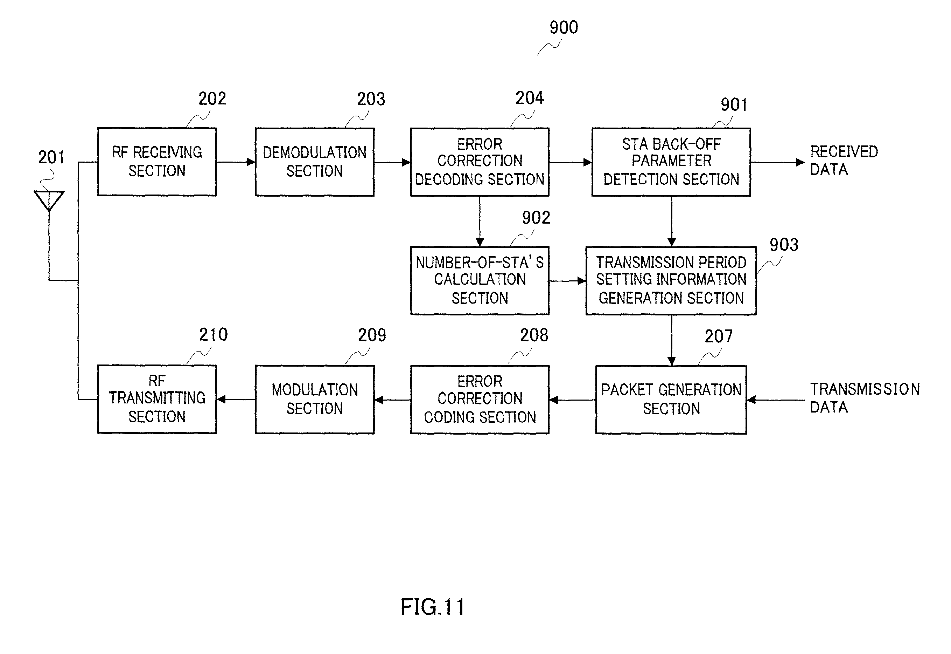

The configuration of a communication apparatus 900 according to Embodiment 3 will now be described using FIG.11. FIG.11 is a block diagram showing the configuration of communication apparatus 900. Communication apparatus 900 is an AP, for example.

As shown in FIG.11, in communication apparatus 900 according to Embodiment 3, number-of-terminals information detection section 205 and number-of-STAs adding section 206 have been eliminated from communication apparatus 200 according to Embodiment 1 shown in FIG.4, and an STA back-off parameter detection section 901, number-of-STAs calculation section 902, and transmission period setting information generation section 903 have been added. Parts in FIG.11 having the same configuration as in FIG.4 are assigned the same reference codes as in FIG.4, and descriptions thereof are omitted.

Error correction decoding section 204 performs error correction decoding of a received signal input from demodulation section 203, and outputs the resulting signal to STA back-off parameter detection section 901 and number-of-STAs calculation section 902.

STA back-off parameter detection section 901 detects back-off parameter information included in the received signal, and outputs this information to transmission period setting information generation section 903. STA back-off parameter detection section 901 also outputs the receive data after detection of back-off parameter information as received data.

Number-of-STAs calculation section 902 calculates the number of STAs in this cell from the received signal input from error correction decoding section 204, and outputs the result of this calculation to transmission period setting information generation section 903. Specifically, number-of-STAs calculation section 902 can ascertain the number of STAs in the cell by referencing the MAC header of a received signal input from error correction decoding section 204, holding the ID within the MAC header, and counting the number of different IDs.

If the difference between the transmission period of each STA found from back-off parameter information input from STA back-off parameter detection section 901, and the transmission period of each STA found from the result of calculating the number of STAs in the cell input from number-of-STAs calculation section 902, is greater than or equal to a threshold value, transmission period setting information generation section 903 generates transmission period setting information for restoring the back-off parameter to the pre-modification back-off parameter, and outputs this information to packet generation section 207.

Packet generation section 207 generates a packet including transmission period setting information input from transmission period setting information generation section 903 and transmission data, and outputs this packet to error correction coding section 208.

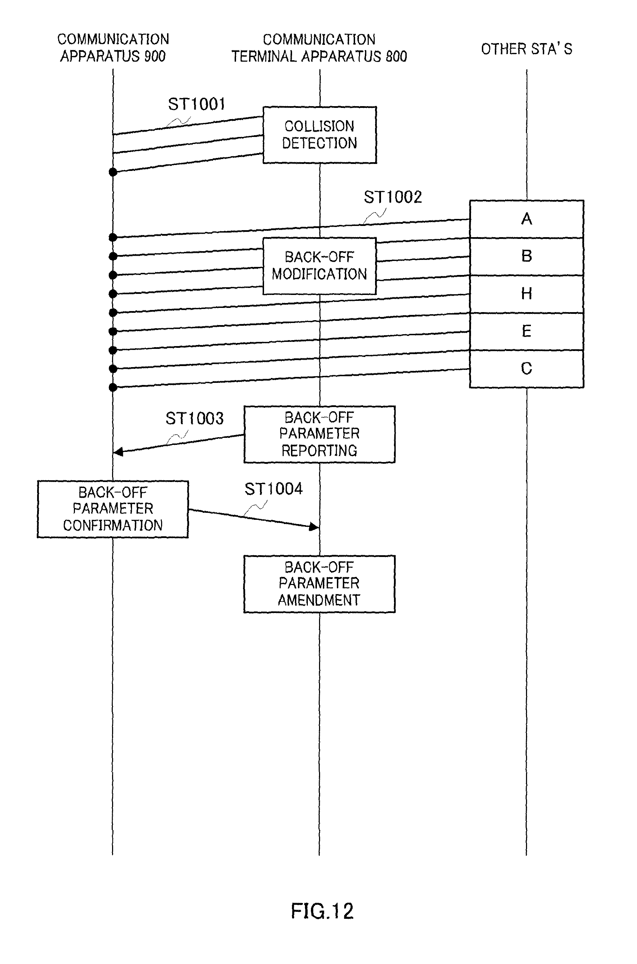

The operation of communication terminal apparatus 800 and communication apparatus 900 will now be described using FIG.12. FIG.12 is a sequence chart showing the operation of communication terminal apparatus 800 and communication apparatus 900.

First, for a transmission signal transmitted to this station from communication apparatus 900 (step ST1001), communication terminal apparatus 800 detects a collision with data addressed to another STA by means of collision detection section 802. Also, a plurality of STAs (A, B, H, E, and C) other than this station perform communication with communication apparatus 900 (step ST1002).

In communication terminal apparatus 800 constituting this station, a signal received by RF receiving section 102 is demodulated by demodulation section 103 and undergoes error correction decoding by error correction decoding section 104, after which STA determination section 105 determines whether the received signal is addressed to this station or is addressed to another STA. If the received signal is addressed to this station, STA determination section 105 processes the signal as received data.

Also, communication terminal apparatus 800 sets a back-off value by means of back-off setting section 803 based on the number of collisions. Back-off setting section 803 is equipped with a table that stores back-off parameter setting information in which, for example, numbers of collisions and back-off parameters are mutually associated, and selects a back-off parameter by referencing the back-off parameter setting information using the number of collisions detected by collision detection section 802. Then back-off setting section 803 finds a back-off value based on the selected back-off parameter. If the back-off value has been modified, communication terminal apparatus 800 reports the back-off parameter to communication apparatus 900 by transmitting back-off parameter information including post-modification back-off value (step ST1003).

Communication apparatus 900 detects the back-off parameter information by means of STA back-off parameter detection section 901, and calculates the number of STAs in its cell by means of number-of-STAs calculation section 902.

Next, communication apparatus 900 determines, by means of transmission period setting information generation section 903, whether or not the difference between the transmission period found from the result of calculating the number of STAs in the cell and the transmission period found from the back-off parameter information is greater than or equal to a threshold value - that is, whether or not the back-off parameter modified by communication terminal apparatus 800 is appropriate. If the modified back-off parameter is determined not to be appropriate, transmission period setting information generation section 903 generates transmission period setting information that restores the pre-modification back-off parameter since the modified back-off parameter is not appropriate. On the other hand, if the modified back-off parameter is determined to be appropriate, transmission period setting information generation section 903 does not generate transmission period setting information.

Communication apparatus 900 then transmits transmission period setting information to communication terminal apparatus 800 (step ST1004). FIG. 12 shows a case in which transmission period setting information generation section 903 determines that a back-off parameter modified by another STA is appropriate, and therefore does not transmit transmission period setting information to another STA, but if transmission period setting information generation section 903 determines that a back-off parameter modified by another STA is not appropriate, transmission period setting information generation section 903 transmits transmission period setting information to another STA.

Communication terminal apparatus 800 detects the transmission period setting information by means of transmission period setting information detection section 801, and sets a back-off value that is a transmission period found by restoring the pre-modification back-off parameter by means of back-off setting section 803. Then transmission standby section 112 performs transmission standby equivalent to the set back-off value.

Thus, according to Embodiment 3, each communication terminal apparatus independently modifies and sets a back-off parameter based on a number of collisions, and if a post-modification back-off parameter is not appropriate, the communication apparatus issues a directive for amendment of the back-off parameter, with the result that it is possible to suppress communication delay irrespective of the packet size, perform communication efficiently, and furthermore solve the hidden terminal problem. Also, according to Embodiment 3, since the communication apparatus issues a directive to restore a back-off parameter to its original state only when a back-off parameter set by a communication terminal apparatus is not appropriate, the processing load in the communication apparatus can be alleviated.

The present application is based on Japanese Patent Application No.2005-203847 filed on July 13, 2005, the entire content of which is expressly incorporated herein by reference.

Industrial Applicability

A communication terminal apparatus and transmitting method of the present invention are suitable for performing communication by means of a CSMA/CA scheme, for example.

**Claims**

1. A communication terminal apparatus comprising:

   a detection section that detects, from a received signal, data addressed to another station in the same cell as a cell to which the station itself belongs;
   an acquisition section that finds a number of said other stations in the same cell based on said data addressed to another station detected by said detection section;
   a reporting section that reports said number of other stations found by said acquisition section to a communicating station;
   a receiving section that receives transmission period setting information that is information for setting a predetermined transmission period in which said communicating station does not overlap the station itself based on said number of other stations reported by said reporting section; and
   a transmission period setting section that transmits transmission data in said transmission period set based on said transmission period setting information.

**2.** The communication terminal apparatus according to claim 1, wherein:

said receiving section receives information on a number of communication terminal apparatuses in said same cell, found by said communicating station, as said transmission period setting information; and
said transmission period setting section transmits transmission data in said transmission period set based on said number of communication terminal apparatuses of said transmission period setting information received by said receiving section and a number of retransmissions of the transmission data.

**3.** The communication terminal apparatus according to claim 2, wherein said transmission period setting section stores a formula whereby said transmission period is identified by means of said number of communication terminal apparatuses and a number of retransmissions of the transmission data, and transmits transmission data in said transmission period set after calculation by means of said formula using said number of communication terminal apparatuses of said transmission period setting information received by said receiving section and a number of retransmissions of the transmission data.

**4.** The communication terminal apparatus according to claim 1, wherein:

said receiving section receives information on a parameter for setting said transmission period as said transmission period setting information; and
said transmission period setting section transmits the transmission data in said transmission period set based on said parameter of said transmission period setting information received by said receiving section and a number of retransmissions of the transmission data.

**5.** The communication terminal apparatus according to claim 4, wherein said transmission period setting section stores a formula whereby said transmission period is identified by means of said parameter and a number of retransmissions of the transmission data, and transmits the transmission data in said transmission period set after calculation by means of said formula using said parameter of said transmission period setting information received by said receiving section and a number of retransmissions of the transmission data.

**6.** A communication apparatus that is said communicating station to which the communication terminal apparatus according to claim 2 reports said number of other stations, wherein said communication apparatus comprises:

an adding section that finds said number of communication terminal apparatuses in the same cell from said number of other stations reported from a plurality of communication terminal apparatuses in said same cell; and
a transmitting section that transmits information on said number of communication terminal apparatuses in the same cell found by said adding section to each communication terminal apparatus.

**7.** A communication apparatus that is said communicating station to which the communication terminal apparatus according to claim 4 reports said number of other stations, wherein said communication apparatus comprises:

an adding section that finds said number of communication terminal apparatuses in the same cell from said number of other stations reported from a plurality of communication terminal apparatuses;
a parameter setting section that sets said parameter for each communication terminal apparatus based on said number of communication terminal apparatuses in the same cell found by said adding section; and
a transmitting section that transmits information on said parameter set by said parameter setting section to each communication terminal apparatus.

**8.** A transmitting method comprising:

a step of each communication terminal apparatus detecting, from a received signal, data addressed to another station in the same cell as a cell to which the station itself belongs;
a step of each communication terminal apparatus finding a number of said other stations in said cell based on detected said data addressed to another station;
a step of reporting found said number of other stations from each communication terminal apparatus to a communication apparatus;
a step of said communication apparatus generating transmission period setting information that is information for setting a transmission period of each communication terminal apparatus based on reported said number of other stations;

a step of said communication apparatus transmitting generated said transmission period setting information of each communication terminal apparatus;

a step of each communication terminal apparatus receiving said transmission period setting information; and

a step of each communication terminal apparatus transmitting transmission data in said transmission period set based on received said transmission period setting information.

PRIOR ART
FIG.1

PRIOR ART

FIG.2

EP 1 903 719 A1

100

| | | | | |
|---|---|---|---|---|
| 102 | 103 | 104 | 105 | 106 |
| RF RECEIVING SECTION | DEMODULATION SECTION | ERROR CORRECTION DECODING SECTION | STA DETERMINATION SECTION | NUMBER-OF-TERMINALS-IN-CELL INFORMATION DETECTION SECTION |

101

RECEIVED DATA

| 108 | | 107 |
|---|---|---|
| BACK-OFF SETTING SECTION | | NUMBER-OF-STA'S HOLDING SECTION |

| 113 | 112 | 111 | 110 | 109 |
|---|---|---|---|---|
| RF TRANSMITTING SECTION | TRANSMISSION STANDBY SECTION | MODULATION SECTION | ERROR CORRECTION CODING SECTION | PACKET GENERATION SECTION |

TRANSMISSION DATA

FIG.3

FIG.4

COMMUNICATION
APPARATUS 200

COMMUNICATION
TERMINAL APPARATUS 100

OTHER STA'S

START OF
DETECTION OF
OTHER STA'S

ST301

| A |
| B |
| H |
| E |
| C |

DETECTION OF
NUMBER OF
STA'S

ST302

REPORTING OF
NUMBER OF
TERMINALS

REPORTING OF
NUMBER OF
TERMINALS FROM
OTHER TERMINALS

ST303

REPORTING OF
NUMBER OF
TERMINALS

ST304

BACK-OFF
MODIFICATION

FIG.5

FIG.6

EP 1 903 719 A1

500

RF RECEIVING SECTION 202

DEMODULATION SECTION 203

ERROR CORRECTION DECODING SECTION 204

CHANNEL INFORMATION DETECTION SECTION 501

NUMBER-OF-TERMINALS INFORMATION DETECTION SECTION 205

RECEIVED DATA

CHANNEL INFORMATION HOLDING SECTION 502

NUMBER-OF-STA'S ADDING SECTION 206

STA BACK-OFF PARAMETER SETTING SECTION 503

PACKET GENERATION SECTION 207

TRANSMISSION DATA

ERROR CORRECTION CODING SECTION 208

MODULATION SECTION 209

RF TRANSMITTING SECTION 210

201

FIG.7

FIG.8

| AP REGISTERED NUMBER OF STA'S - NUMBER OF TERMINALS DETECTED BY STA | STA BACK-OFF PARAMETER |
|---|---|
| 1 | 1 |
| 2 | 1 |
| 3 | 2 |
| 4 | 2 |
| 5 | 3 |
| 6 | 3 |

FIG.9

EP 1 903 719 A1

800

| 102 | 103 | 104 | 105 | 801 |
|---|---|---|---|---|
| RF RECEIVING SECTION | DEMODULATION SECTION | ERROR CORRECTION DECODING SECTION | STA DETERMINATION SECTION | TRANSMISSION PERIOD SETTING INFORMATION DETECTION SECTION |

101

RECEIVED DATA

| 802 | 803 |
|---|---|
| COLLISION DETECTION SECTION | BACK-OFF SETTING SECTION |

| 113 | 112 | 111 | 110 | 109 |
|---|---|---|---|---|
| RF TRANSMITTING SECTION | TRANSMISSION STANDBY SECTION | MODULATION SECTION | ERROR CORRECTION CODING SECTION | PACKET GENERATION SECTION |

TRANSMISSION DATA

FIG10

FIG.11

COMMUNICATION
APPARATUS 900

COMMUNICATION
TERMINAL APPARATUS 800

OTHER STA'S

ST1001

COLLISION
DETECTION

ST1002

A

BACK-OFF
MODIFICATION

B

H

E

C

ST1003

BACK-OFF
PARAMETER
REPORTING

BACK-OFF
PARAMETER
CONFIRMATION

ST1004

BACK-OFF
PARAMETER
AMENDMENT

FIG.12

## INTERNATIONAL SEARCH REPORT

International application No.

PCT/JP2006/313781

A. CLASSIFICATION OF SUBJECT MATTER
*H04L12/28*(2006.01)i

According to International Patent Classification (IPC) or to both national classification and IPC

B. FIELDS SEARCHED

Minimum documentation searched (classification system followed by classification symbols)
H04L12/28

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-173663 A  (Fujitsu Ltd.),<br>26 June, 1998 (26.06.98),<br>Claims 1, 2: Par. Nos. [0025] to [0042];<br>Fig. 4<br>& US 3762004 B | 1-8 |
| A | JP 2003-78532 A  (NTT Docomo Inc.),<br>14 March, 2003 (14.03.03),<br>Claims 1, 2; Par. Nos. [0023], [0026], [0031],<br>[0032], [0042], [0054], [0088], [0089], [0092];<br>Fig. 3<br>(Family: none) | 1-8 |

☐ Further documents are listed in the continuation of Box C.      ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
    06 September, 2006 (06.09.06)

Date of mailing of the international search report
    19 September, 2006 (19.09.06)

Name and mailing address of the ISA/
    Japanese Patent Office

Authorized officer

Facsimile No.

Telephone No.

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005203847 A